**Europäisches Patentamt**

**European Patent Office**

**Office européen des brevets**

(11) Veröffentlichungsnummer: **0 093 354**

**A2**

(12) # EUROPÄISCHE PATENTANMELDUNG

(21) Anmeldenummer: **83103990.4**

(51) Int. Cl.³: **A 01 D 69/00**

(22) Anmeldetag: **23.04.83**

(30) Priorität: **30.04.82 DE 3216189**

(43) Veröffentlichungstag der Anmeldung:
**09.11.83 Patentblatt 83/45**

(84) Benannte Vertragsstaaten:
**AT BE CH IT LI NL**

(71) Anmelder: **Wolf-Geräte GmbH**
**Gregor-Wolf-Strasse Postfach 860 und 880**
**D-5240 Betzdorf/Sieg(DE)**

(72) Erfinder: **Schütz, Eberhard**
**Betzdorferstrasse 92**
**D-5244 Daaden(DE)**

(74) Vertreter: **Koch, Günther, Dipl.-Ing. et al,**
**Kaufingerstrasse 8**
**D-8000 München 2(DE)**

(54) **Rasenmäher mit Radantrieb.**

(57) Bei einem Rasenmäher mit Radantrieb ist ein stufenlos einstellbares Keilriemengetriebe vorgesehen, bei dem der wirksame Durchmesser der Keilscheibenpaare durch ein Stellgetriebe veränderbar ist. Dieses Stellgetriebe bewirkt über Schaltgabeln (62 bzw. 64) eine entgegengesetztsinnige Verschiebung der losen Keilriemenscheiben (42 bzw. 46) auf Antriebswelle (20) bzw. Abtriebswelle (22). Die Gabelarme (60 bzw. 62) sitzen auf parallel zueinander drehbar gelagerten Wellen, auf denen je ein Übertragungshebel (74) bzw. (80) sitzt, deren Enden über einen Lenker (82) gelenkig verbunden sind, wobei die wirksame Länge des Lenkers (82) durch eine Langlocheinstellung der Verbindungsschrauben veränderbar ist, wodurch die Riemenspannung eingestellt werden kann.

FIG. 2

## Rasenmäher mit Radantrieb

Die Erfindung bezieht sich auf einen motorisch angetriebenen Rasenmäher der im Oberbegriff des Patentanspruchs 1 angegebenen Gattung. Durch das stufenlose Getriebe läßt sich bei derartigen Rasenmähern die Fahrtgeschwindigkeit der Grasbeschaffenheit und-Höhe, aber auch den individuellen Schneidgewöhnheiten der Bedienungsperson anpassen. Die Stillsetzung mit der Möglichkeit eines Zurückziehens des Mähers erfolgt über eine ausrückbare Kupplung. Bei bekannten Rasenmähern dieser Bauart erfolgt die Einstellung der verschiebbaren Keilriemenscheiben einerseits über ein manuell einstellbares Glied und andererseits über eine Rückzugsfeder, deren Kraft beim Einstellen in Gegenrichtung überwunden werden muß. Dies bedingt relativ hohe Einstellkräfte und die Festlegung der gewünschten Einstellung,damit diese dauerhaft erhalten bleiben kann.

Der Erfindung liegt die Aufgabe zugrunde, den Fahrkomfort eines solchen Rasenmähers dadurch zu erhöhen, daß die Einstellbarkeit des Übersetzungsverhältnisses vereinfacht wird und ohne Anwendung einer auf eine Keilriemenscheibe wirkenden Rückholfeder eine feinfühlige Einstellung gewährleistet wird.

Gelöst wird die gestellte Aufgabe durch die im Kennzeichnungsteil des Patentanspruchs 1 angegebenen Merkmale.

0093354

Durch die Erfindung wird erreicht, daß in beiden Einstellrichtungen über formschlüssig wirkende Einstellglieder, deren Bewegung über ein Gestänge synchronisiert ist, der gewünschte Bewegungsverlauf der losen Keilriemenscheiben gewährleistet wird. Die Einstellbarkeit des Stellgetriebes ermöglicht eine Einstellung auf eine optimale Riemenspannung, wobei einer eventuellen Verlängerung des Keilriemens im Betrieb durch Nachstellung Rechnung getragen werden kann.

Weitere zweckmäßige konstruktive Ausgestaltungen der Erfindung ergeben sich aus den Unteransprüchen 2 bis 10.

Nachstehend wird ein Ausführungsbeispiel der Erfindung anhand der Zeichnung beschrieben. In der Zeichnung zeigen:

Figur 1 einen Teilschnitt eines erfindungsgemäß aufgebauten Rasenmähers;

Figur 2 das in der Antriebsverbindung des Rasenmähers gemäß Figur 1 zwischen Motor und Antriebsrädern angeordnete stufenlose Getriebe in einem Schnitt nach der Linie II-II gemäß Figur 3;

Figur 3 eine Ansicht des Getriebes betrachtet in Richtung des Pfeiles III gemäß Figur 2;

Figur 4 eine Ansicht des Getriebes in Richtung des Pfeiles IV gemäß Figur 2;

Figur 5 einen Schnitt nach der Linie V-V gemäß Figur 3 und

Figur 6 eine Ansicht des Getriebes in Richtung des Pfeiles VI gemäß Figur 3.

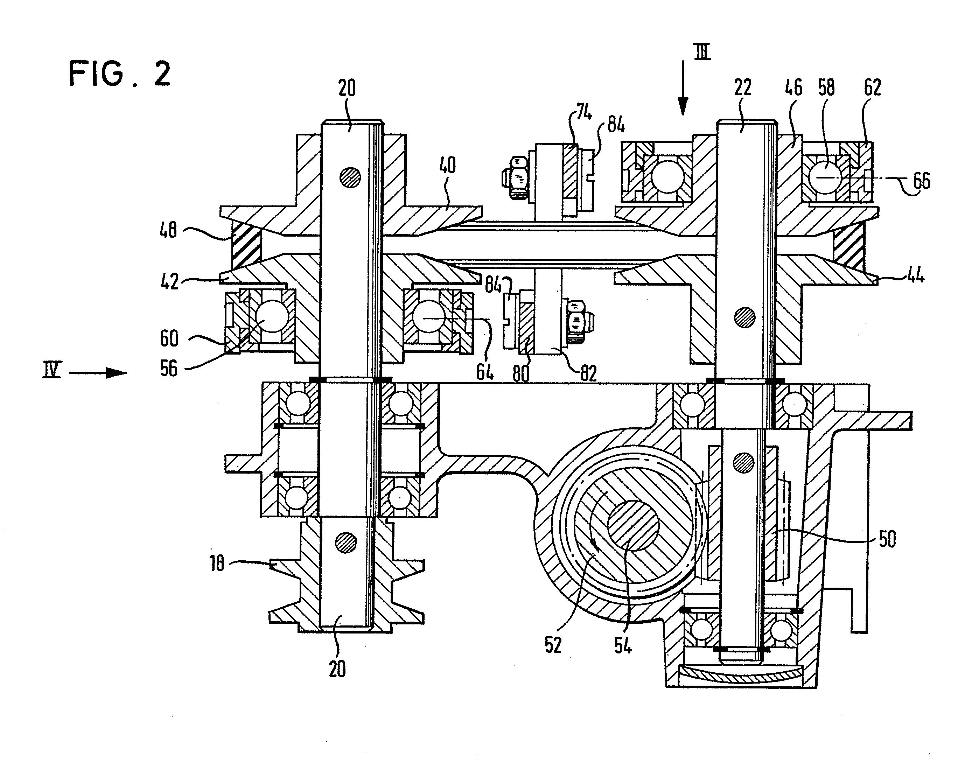

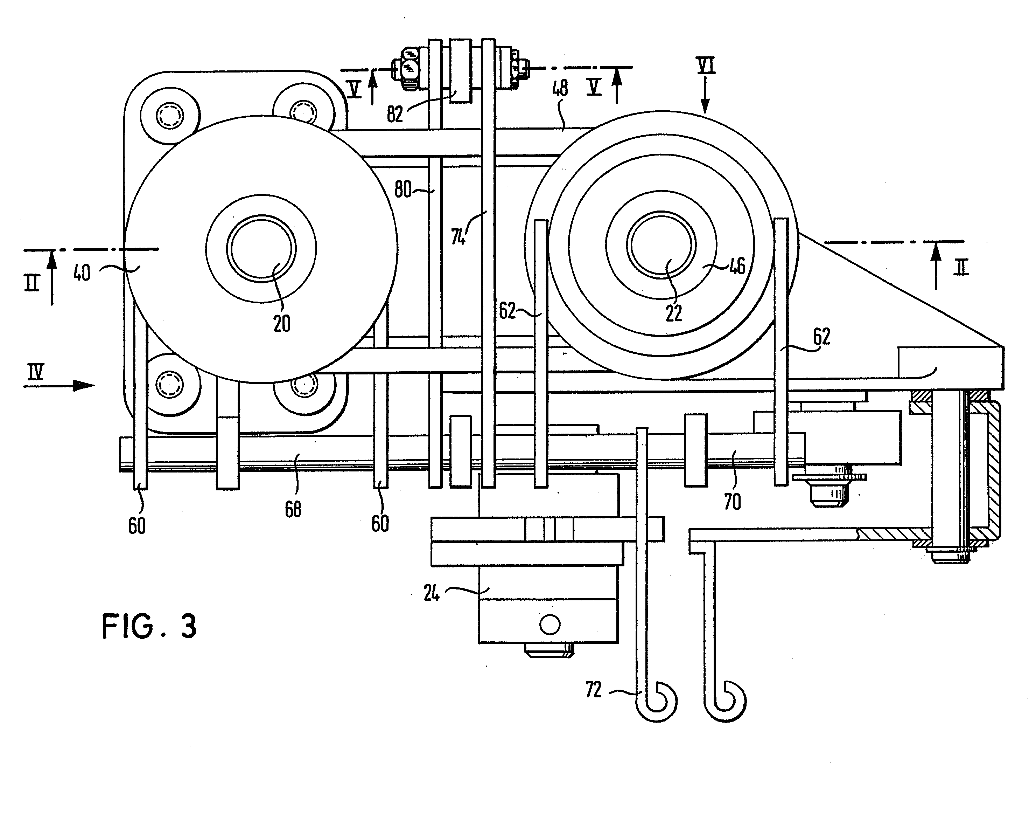

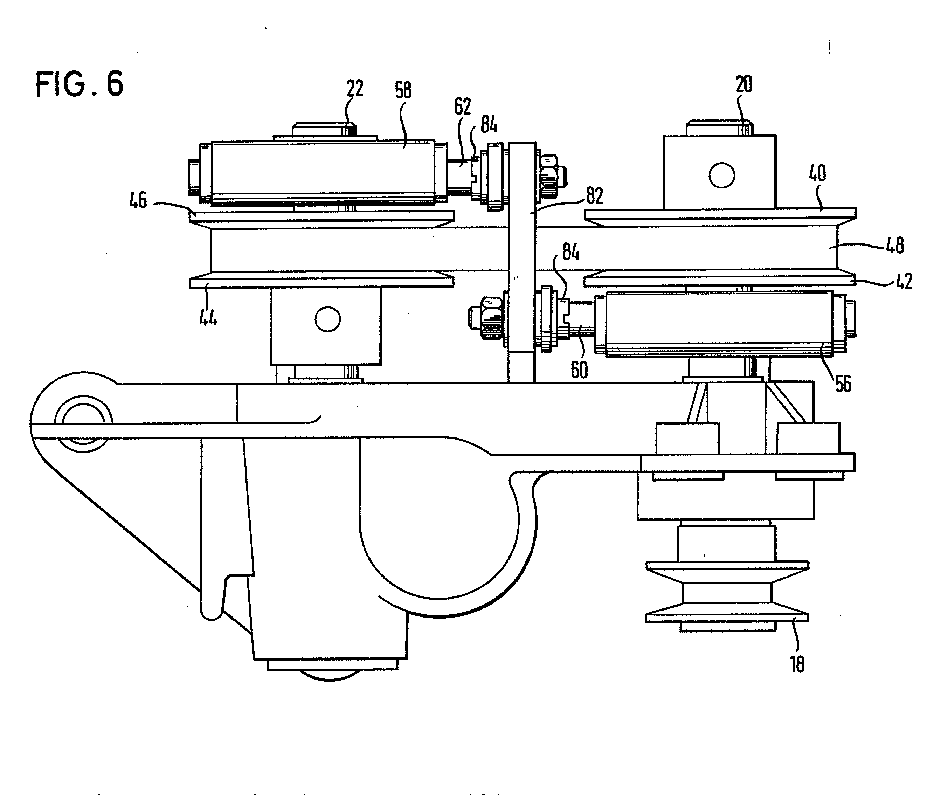

Auf der Abtriebswelle 10 des Motors ist der umlaufende Messerbalken 12 angeordnet. Von der Welle 10 wird eine Keilriemenscheibe 14 angetrieben, die über einen Keilriemen 16 eine Antriebskeilriemenscheibe 18 antreibt, die auf der Antriebswelle 20 eines stufenlos einstellbaren Keilriemengetriebes sitzt, dessen Abtriebswelle 22 über eine Schlingfederkupplung 24 ein Kettenrad 26 antreibt, welches über eine Kette 28 das Antriebsdrehmoment auf ein Ritzel 30 überträgt, von wo aus über einen Riemen 32 die Radachse 34 angetrieben ist. Mittels des Bowdenzuges 36 ist die Schlingfederkupplung 24 ausrückbar. Ein weiterer Bowdenzug 38 dient zur Einstellung der Abtriebsdrehzahl des stufenlosen Getriebes, welches nachstehend anhand der Figuren 2 bis 6 näher erläutert wird.

Auf der Antriebswelle 20 des stufenlosen Getriebes ist eine feste Keilriemenscheibe 40 und eine axial verschiebbare Keilriemenscheibe 42 aufgesetzt. Die Abtriebswelle 22 des stufenlosen Getriebes trägt eine feste Keilriemenscheibe 44 und eine axial verschiebbare Keilriemenscheibe 46. Über die beiden Keilriemenscheiben-Paare läuft ein Keilriemen 48. Die Abtriebswelle 22 des stufenlosen Getriebes treibt über eine Schnecke 50 und ein hiermit in Eingriff stehendes Schneckenrad das auf der Welle 54 sitzende Antriebsglied der Schlingfederkupplung 24.

Die gegensinnige Verstellung der losen Keilriemenscheiben 42 bzw. 46 erfolgt über ein Stellgetriebe, welches nachstehend im einzelnen beschrieben ist:

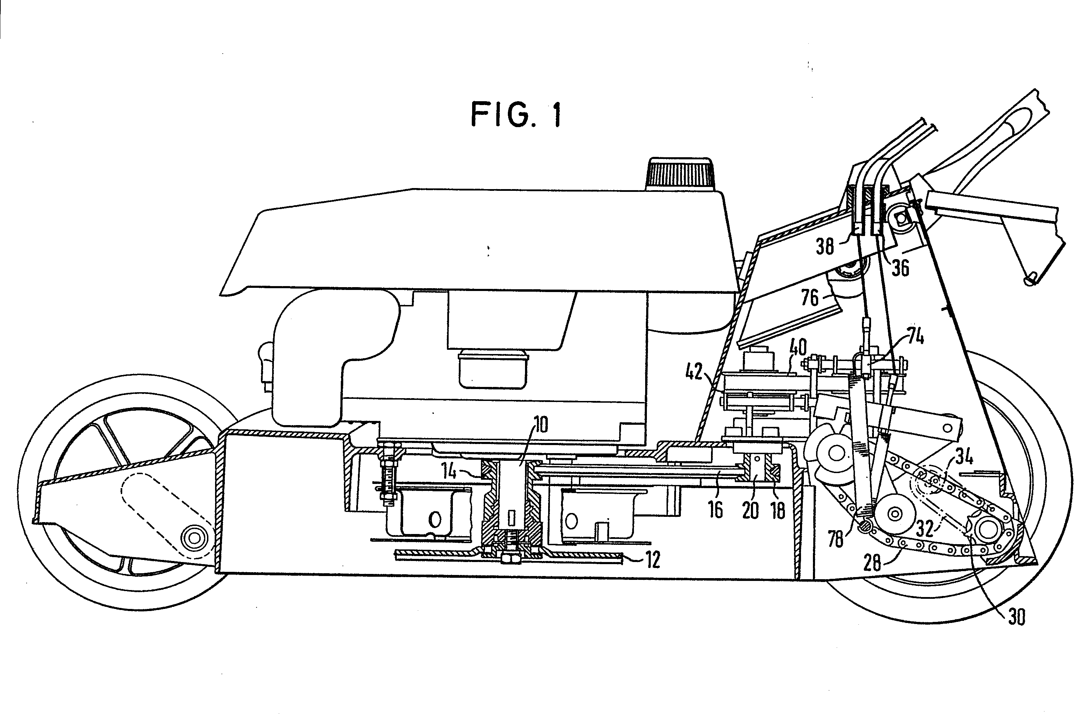

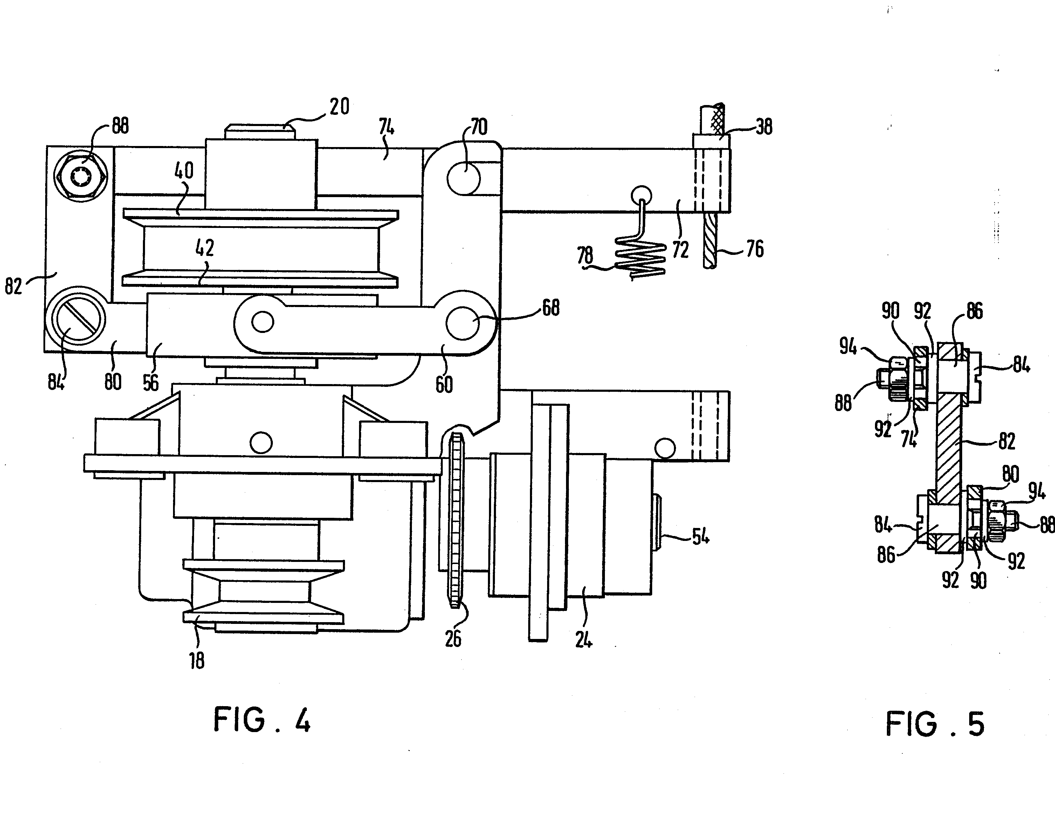

Auf die Naben der losen Keilriemenscheiben 42 bzw. 46 ist ein Kugellager 56 bzw. 58 aufgesetzt, in deren Außenlaufringen die Gabelarme 60 bzw. 62 je einer Schaltgabel um Achsen 64 bzw. 66 schwenkbar angelenkt sind. Die Gabelarme 60 sind drehfest auf einer im Getriebegehäuse drehbar gelagerten Welle 68 aufgesetzt, und die Gabelarme 62 des abtriebsseitigen Keilscheibenpaares sind drehfest auf einer Welle 70 aufgesetzt, die achsparallel zur Welle 68 im Gehäuse drehbar gelagert ist. Die Welle 70 trägt außerdem drehfest einen Stellhebel 72 und einen Übertragungshebel 74. Am Stellhebel 72 greift das Zugglied 76 des Bowdenzuges 38 an, dessen Stellglied am Führungsgriff des Rasenmähers angeordnet ist. Eine Rückholfeder 78 verschwenkt den Stellhebel 72 gemäß Fig. 4 im Uhrzeigersinn um die Achse der Welle 70. Diese Feder 78 (Fig. 1) ist derart bemessen, daß jede Schaltstellung durch das Stellglied des Bowdenzuges eingestellt werden kann und das jeweils eingestellte Übersetzungsverhältnis erhalten bleibt.

Die Welle 68 trägt außer den Gabelarmen 60 noch einen Übertragungshebel 80, der parallel zu dem Übertragungshebel 74 verläuft, wobei der eine Hebel über dem Keilriemen 48 und der andere unter dem Keilriemen 16 liegt. Die Enden der Übertragungshebel sind durch einen Lenker 82 verbunden, wobei die wirksame Länge des Lenkers 82 einstellbar ist. Die gelenkige Verbindung zwischen den Übertragungshebeln und dem Lenker erfolgt über Schrauben 84. Jede Schraube weist einen Schaftabschnitt 86 auf, der durch ein Loch des Lenkers 82 hindurchsteht. An den das Scharnier bildenden Schaft 86 schließt sich ein im Durchmesser verringerter Gewindeschaft 88 an, der durch ein Langloch 90 am Ende der Übertragungshebel 74 bzw. 80 hindurchsteht. Die Langlöcher 90 verlaufen in Richtung des Lenkers 82, so daß dessen wirksame Länge durch Einstellung des Gewindeschaftabschnitts 88 innerhalb des Langloches in bestimmten Grenzen eingestellt werden kann.

Die Übertragungshebel 74 bzw. 80 werden auf dem Gewindeschaftabschnitt 88 zwischen zwei Unterlagsscheiben 92 mittels der Mutter 94 verspannt. Die Länge des Schaftabschnitts 86 ist dabei derart bemessen, daß sich die Schraube 84 im Loch des Lenkers 82 drehen kann.

Das Stellgetriebe arbeitet wie folgt:

In den Figuren 2 bis 6 ist das Keilscheibengetriebe in einer mittleren Stellung dargestellt, in der der Keilriemen 48 auf beiden Keilscheibenpaaren mit etwa gleichem Radius abläuft. Aus dieser Mittelstellung kann durch den Bowdenzug 38 das Getriebe stufenlos in beiden Richtungen eingestellt werden. Wenn der Stellhebel 72 durch den Bowdenzug bzw. die Rückholfeder 78 im Uhrzeigersinn gemäß Fig. 4 um die Achse der Welle 70 verschwenkt wird, dann erhöht sich die Abtriebsdrehzahl und bei einer Verschwenkung im Gegenuhrzeigersinn verringert sich die Abtriebsdrehzahl.

Durch Verschwenkung des Stellhebels 72 im Uhrzeigersinn (Fig. 4) wird bewirkt, daß die Gabelarme 62 über die Kugellager 58 die lose Keilriemenscheibe 46 auf der Abtriebswelle 22 im Sinne einer Vergrößerung zu der festen Keilriemenscheibe 44 verschieben, so daß der Keilriemen 48 auf einen kleineren Durchmesser abfällt. Gleichzeitig wird über die Übertragungshebel 74 und 80 sowie den Verbindungslenker
82 die Welle 68 ebenfalls im Uhrzeigersinn gemäß
Fig. 4 verschwenkt, wodurch die Gabelarme 60 veranlaßt werden, das Kugellager 56 und damit die lose
Keilriemenscheibe 42 auf der Antriebswelle 20 gemäß
Fig. 2 nach oben zu verschieben, so daß sich ein
größerer wirksamer Radius für den Keilriemen 48
ergibt.

Umgekehrt erfolgt durch Verschwenkung des Stellhebels
72 im Gegenuhrzeigersinn gemäß Fig. 4 eine Änderung
des Übersetzungsverhältnisses ins Langsame, wobei die
Keilriemenscheiben 40, 42 gespreizt und die Keilriemenscheiben 46, 44 aufeinander zu bewegt werden.

Durch das erfindungsgemäß ausgebildete Stellgetriebe
wird erreicht, daß der Keilriemen bei jedem Übersetzungsverhältnis mit der eingestellten Vorspannung
den balligen Laufflächen der Keilriemenscheiben anliegt, wobei die Einstellung mit geringer Kraft außerordentlich feinfühlig während des Laufs eingestellt
werden kann.

Die Riemenspannung mit der der Keilriemen 48 auf
den Keilriemenscheiben läuft, kann durch Veränderung
der wirksamen Länge des Lenkers 82 eingestellt werden,
indem die Übertragungshebel nach Lösen der Muttern 94
gegeneinander gepreßt (Erhöhung der Spannung) oder auseinandergezogen (Verringerung der Spannung) werden, wobei die Gewindeschaftabschnitte 88 in den Langlöchern 90 der Übertragungshebel verschoben werden
und beim Erreichen der richtigen Einstellung werden die Muttern 94 angespannt, wodurch die wirksame Länge des Lenkers festgelegt ist und wobei
die Schrauben 84 sich mit ihrem glatten Schaftabschnitt 86 in den kreisrunden Löchern des Lenkers
82 drehen können.

Patentansprüche:

1.  Motorisch angetriebener Rasenmäher mit Radantrieb über ein stufenlos einstellbares
    Keilriemengetriebe, dessen lose Keilriemen-
    scheiben zur Änderung des Übersetzungsverhält-
    nisses gegensinnig auf den sie tragenden Wellen
    verschiebbar sind,
    dadurch gekennzeichnet, daß ein einstellbares
    Stellgetriebe (68,70; 60,62; 74,80,82) die
    Bewegung der losen Keilriemenscheiben (42,46)
    synchronisiert.

2.  Rasenmäher nach Anspruch 1,
    dadurch gekennzeichnet, daß das Stellgetriebe
    Stellgabeln (60 bzw. 62) aufweist, die am Außenlaufring von Kugellagern (56) angelenkt sind,
    deren Innenlaufring auf die Nabe der losen Keilriemenscheiben (42,46) aufgezogen sind.

3. Rasenmäher nach Anspruch 2,
dadurch gekennzeichnet, daß die Schaltgabeln
(60 bzw. 62) von parallel zueinander drehbar
gelagerten Wellen (68 bzw. 70) getragen
werden, auf die je ein Übertragungshebel (80,74)
aufgesetzt ist, deren Enden über einen Lenker
(82) verbunden sind.

4. Rasenmäher nach Anspruch 3,
dadurch gekennzeichnet, daß die wirksame Länge
des Lenkers (82) einstellbar ist.

5. Rasenmäher nach Anspruch 4,
dadurch gekennzeichnet, daß die die Scharnierverbindung zwischen Übertragungshebeln (74,80)
und Lenker (82) herstellenden Schrauben (84)
in Langlöchern (90) der Übertragungshebel verschiebbar und an jeder Stelle durch die Mutter
(94) fixierbar sind.

6. Rasenmäher nach Anspruch 3,
dadurch gekennzeichnet, daß auf einer der die
Schaltgabeln (60 bzw. 62) tragenden Wellen
(68 bzw. 70) ein Stellhebel (72) aufgesetzt
ist, an dem einerseits ein Bowdenzug (38) und
andererseits eine Rückzugsfeder (78) angreift.

7. Rasenmäher nach Anspruch 3,
dadurch gekennzeichnet, daß die parallel zueinander geführten Übertragungshebel (74,80)
den Keilriemen auf beiden Seiten zwischen den
beiden Keilriemen-Paaren kreuzen.

8.  Rasenmäher nach einem der Ansprüche 1 bis 7, dadurch gekennzeichnet, daß die Abtriebswelle (22) des stufenlosen Getriebes über ein Schneckengetriebe (50,52) mit dem Eingang einer Schlingfederkupplung (24) verbunden ist, die abtriebsseitig mit den Radachsen in Verbindung steht.

9.  Rasenmäher nach Anspruch 8, dadurch gekennzeichnet, daß die Schlingfederkupplung (24) über einen Bowdenzug (36) ausrückbar ist, dessen Stellglied ebenso wie das Stellglied des Bowdenzuges (38) für das stufenlose Getriebe am Führungsgriff des Rasenmähers angeordnet ist.

10. Rasenmäher nach einem der Ansprüche 1 bis 9, dadurch gekennzeichnet, daß eine Antriebskeilriemenscheibe (18) des stufenlosen Getriebes über einen Keilriemen (16) von einer Keilriemenscheibe (14) angetrieben wird, die auf der motorisch angetriebenen Messerwelle (10) sitzt.

FIG. 1

FIG. 2

FIG. 3

0093354

FIG. 4

FIG. 5

0093354

FIG. 6

0093354